# EUROPEAN PATENT SPECIFICATION

(11) **EP 4 550 075 B1**
(45) Date of publication and mention of the grant of the patent: **30.09.2026**
(21) Application number: 24812054.5
(22) Date of filing: 19.08.2024
(51) Int. Cl.: G05D 1/43, B60W 40/114, B60W 60/00

(54) **YAW RATE-BASED TRAJECTORY TRACKING METHOD FOR TRACKED VEHICLE**
GIERRATENBASIERTES TRAJEKTORIENVERFOLGUNGSVERFAHREN FÜR EIN KETTENFAHRZEUG
PROCÉDÉ DE SUIVI DE TRAJECTOIRE BASÉ SUR UN TAUX DE LACET POUR VÉHICULE À CHENILLES

(30) Priority: 18.09.2023 CN 202311198151
(43) Date of publication of application: 07.05.2025
(73) Proprietor: Shanghai Allynav Technology Co. Ltd., Shanghai 201702 (CN)
(72) Inventor: ZHANG, Chunhui, Shanghai 201702 (CN); LI, Xiaoyu, Shanghai 201702 (CN); JU, Dayuan, Shanghai 201702 (CN)
(74) Representative: Santarelli
(86) International application number: PCT/CN2024/112966
(87) International publication number: WO 2025/060782

(56) References cited:
- CN-A- 108 646 748
- CN-A- 110 716 565
- CN-A- 111 812 974
- CN-A- 114 355 941
- CN-A- 116 520 855
- CN-A- 116 520 857
- CN-A- 117 002 479
- DE-A1- 102013 113 685
- US-A1- 2012 179 322
- US-A1- 2019 031 237
- SIVASHANKAR N ET AL: "Yaw Rate Estimation for Vehicle Control Applications", JOURNAL OF DYNAMIC SYSTEMS, MEASUREMENT, AND CONTROL,, vol. 120, no. 2, 1 June 1998 (1998-06-01), pages 267 - 274, XP009518025, ISSN: 0022-0434, [retrieved on 19980601], DOI: 10.1115/1.2802418

## Description

### Technical Field

This invention relates to the field of autonomous driving technology, specifically a trajectory tracking method for tracked vehicles based on yaw rate.

### Background Technology

The autonomous driving system for tracked vehicles is a device system that controls the vehicle by executing mechanisms to rotate the left and right tracks based on position and attitude information. The movement of tracked vehicles depends on the coordination of the left and right tracks. The overall motion of a tracked vehicle is obtained from the combined action of the respective motion states of the left and right tracks. Therefore, the lateral and longitudinal movements of the vehicle are coupled. The control mechanisms and operating environments of tracked vehicles are often non-linear, which makes motion control of tracked vehicles more difficult.

The motion process of tracked vehicles involves coupled lateral and longitudinal movements. Therefore, when performing lateral control, it is still necessary to consider the longitudinal motion state. In the process of trajectory tracking, both tracking accuracy and motion stability are important evaluation indicators. This requires that tracked vehicles not only minimize lateral errors during motion but also keep the yaw angle as small as possible while ensuring accuracy.

Under ideal conditions, there is no slippage between the drive wheels and tracks, or between the tracks and the ground. In this case, the linear velocity of the drive wheel rim can be considered as the track speed. The rotational speed of the drive wheel can be measured by installing Hall sensors on the drive wheel, thereby calculating the winding speed of the track. However, this solution involves complex sensor arrangement, high cost, and the accuracy and lifespan of sensors will be affected in muddy environments. Moreover, slippage between the drive wheels and tracks, and between the tracks and the ground will lead to control errors. Methods of measuring track speed cannot solve the problem of slippage errors.

In the ideal model of tracked vehicles, actuator actions affect the speeds of the left and right tracks, which can be viewed as the sum of longitudinal speed and differential speed components. The longitudinal control mechanism is typically the throttle, while the lateral control mechanism is usually the steering wheel or joystick. The action of the lateral control mechanism controls the speeds of the left and right tracks through mechanical transmission or electronic control, thereby achieving differential steering of the vehicle. However, due to transmission delays between the control-transmission-execution mechanisms, schemes that control the heading of tracked vehicles struggle to meet high-precision control requirements. Moreover, the existence of the aforementioned delay problem can lead to dangerous situations during autonomous driving.

Furthermore, the execution mechanisms of tracked vehicles have centralized and distributed structural differences. Control methods developed for distributed chassis can directly control the left and right tracks. However, for tracked vehicles with centralized drive, the power transmission of left and right paths is coupled, making control more challenging.

Patent document US 2012/179322 A1 discloses a method for autonomous navigation of a tracked or skid-steer vehicle that travels along a path comprising a series of waypoints. A measured vehicle location and heading is compared with the desired location specified by the waypoint list. An error signal including a cross-track error representing the distance between the vehicle position and the planned path, a vehicle heading error and a waypoint heading error is output, the vehicle heading error being the angular difference between the vehicle heading and a vector that is calculated dependent on the vehicle position, the current tracking waypoint and the following waypoint. Vehicle speed and yaw rate are thus generated to obtain left and right track speeds. A steering regulation is determined based on the three errors.

### Summary of the Invention

The invention is set out in the appended claims. To address the issues of insufficient trajectory tracking control accuracy and stability of tracked vehicles, as well as the high cost and large delay of existing measurement methods, this invention provides a target yaw rate calculation method for high-precision trajectory tracking of tracked vehicles based on geometry and kinematics, as well as a method for tracking the target yaw rate.

The purpose of this invention is to provide a trajectory tracking method for tracked vehicles based on yaw rate to solve the problems mentioned in the background technology above. This method analyzes the lateral error of the vehicle's current pose geometrically, combines it with the heading error through weighted calculation to obtain the target deflection angle, and then converts the target deflection angle into the target yaw rate through the vehicle's kinematics, which is then sent to the control mechanism for execution.

To solve the above technical problems, this invention provides the following technical solution: a trajectory tracking method for tracked vehicles based on yaw rate, the tracking method includes:
S100: Calculating vehicle position and attitude based on GNSS information;
S200: Determining a vehicle's lateral error and heading error;
S300: Calculating a vehicle's target deflection angle required to correct the vehicle's lateral error and heading error;
S400: Calculating a vehicle's target differential speed ratio of left to right wheel speeds;
S500: Calculating a vehicle's target yaw rate;
S600: Controlling the action of a control mechanism to complete yaw rate tracking.

Wherein, in step S200, the lateral error is obtained through the geometric relationship between the vehicle position and a target trajectory. Wherein, in step S300, the calculation formula for the target deflection angle is: $δ = {ω}_{h} \left({θ}_{{traj}_{_ h}}-{θ}_{{ego}_{_ h}}\right) + {ω}_{lat} {tan}^{- 1} \left(\frac{{e}_{lat}}{n {V}_{c} T cos \left({θ}_{{traj}_{_ h}}-{θ}_{{ego}_{_ h}}\right)}\right)$ where, δ: target deflection angle; ω*ₕ*: weight of heading error; ωₗₐₜ: weight of lateral error; θ_{traj_h}: tangential direction angle of target trajectory; θ_{ego_h}: body orientation angle of controlled vehicle; eₗₐₜ: lateral error; n: number of cycles expected to achieve lateral error convergence; T: time length of each control cycle; V_{c}: current vehicle speed.

Wherein, in step S400, the calculation formula for the target differential speed ratio is: $k = \frac{2 {V}_{c} f \left(δ\right) - δB}{2 {V}_{c} f \left(δ\right) + δB}$ where, k: target differential speed ratio; f(δ): an adjustable parameter, being a custom function of target deflection angle δ; B; width of tracked vehicle chassis centerline.

Wherein the custom function of target deflection angle δ is: $f \left(δ\right) = \sqrt{{\left(n {V}_{c} T cos\left({θ}_{{traj}_{_ h}}-{θ}_{{ego}_{_ h}}\right)\right)}^{2} + {e}_{lat}^{2}}$

Preferably, in S500, the calculation formula for the target yaw rate is: ${ω}_{T} = \frac{2 {V}_{c} \left(k-1\right)}{B \left(k+1\right)}$ where, ω_{T}: target yaw rate.

Preferably, in S600, yaw rate tracking is completed by controlling the control mechanism to make the yaw rate error converge to 0, the calculation formula for the yaw rate error is: ${e}_{ω} = {ω}_{T} - {ω}_{real}$ where, e_{ω}: yaw rate error; ωᵣₑₐₗ: actual yaw rate of current vehicle measured by gyroscope.

Preferably, based on the above algorithm, the vehicle's yaw rate is controlled through the control mechanism based on real-time feedback of the yaw rate error.

Preferably, the weights of heading error and lateral error are constants.

Preferably, the weights of heading error and lateral error are functions, the functions are: $\left\{\begin{matrix}{ω}_{lat} = 5 + 0.5 {e}_{lat} \\ {ω}_{h} = 1\end{matrix}.\right.$

Compared with prior art, the beneficial effects achieved by this invention are: This invention can not only be widely applied to both centralized and distributed tracked vehicles; it can also improve the trajectory tracking accuracy and stability of tracked vehicles, and enhance the overall system stability by reducing the delay in measuring vehicle states, thus avoiding dangerous situations.

The working principle of this invention: by measuring the lateral error and heading error of the tracked vehicle, the target yaw rate for achieving trajectory tracking is calculated based on the geometric model of the tracked vehicle and the kinematic model of trajectory tracking. Then, by controlling the control mechanism, tracking and fitting of the target yaw rate is achieved.

### Brief Description of Figures

The figures are used to provide further understanding of this invention, and form a part of the specification. They are used to explain the invention together with the embodiments of this invention, and do not constitute limitations on this invention. In the figures:
Figure 1 is a flow chart of this invention;
Figure 2 is a simplified diagram of trajectory tracking for tracked vehicles in this invention.

### Detailed Description of Embodiments

The following will combine the drawings in the embodiments of this invention to clearly and completely describe the technical solutions in the embodiments of this invention. Obviously, the described embodiments are only a part of the embodiments of this invention, not all of the embodiments.

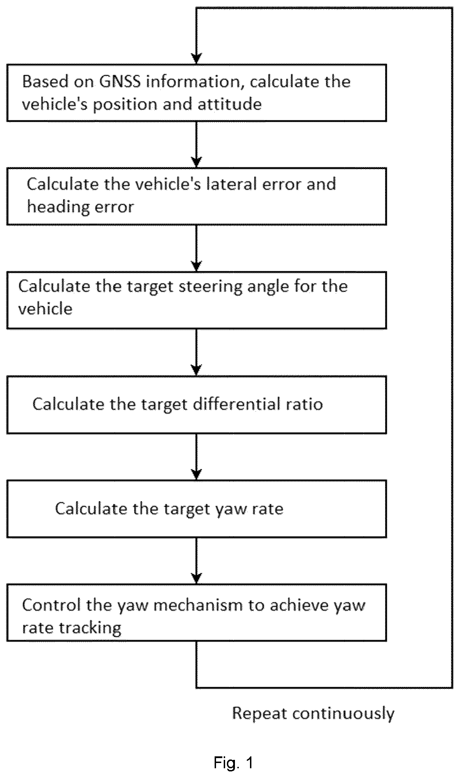

**This invention provides a technical solution, with the specific flow chart shown in** **Figure 1****. The specific execution process of this method is as follows.**

The tracked vehicle needs to be equipped with a GNSS antenna and a gyroscope. Taking the steering wheel as an example of the control mechanism, an encoder needs to be installed on the steering wheel motor. The vehicle position and heading information are obtained through GNSS. The yaw rate is obtained through the gyroscope, and the steering wheel angle is obtained through the encoder. The control mechanism can also be a joystick or other alternative structures.

### 1. Target deflection angle calculated based on geometry

Based on the pose state between the vehicle and the trajectory obtained by GNSS, taking the deformed Cartesian coordinate system as an example in the figure, the positive north direction is set as the X-axis and the positive east direction as the Y-axis. The coordinate system can also be an east-north-up coordinate system, earth-centered earth-fixed coordinate system, Frenet coordinate system, or other equivalent coordinate systems. The equations in this invention can be characterized in continuous or discrete form with the same effect.

The target deflection angle of the tracked vehicle can be expressed by equation 1: $δ = {ω}_{h} {δ}_{h} \left(t\right) + {ω}_{lat} {δ}_{lat} \left(t\right)$ ωₕ, ωₗₐₜ: weights of heading error and lateral error. In practical applications, they can be fixed values or functions related to parameters such as speed and lateral error. For example, equation 2: $\left\{\begin{matrix}{ω}_{lat} = 5 + 0.5 {e}_{lat} \\ {ω}_{h} = 1\end{matrix}\right.$

In equation 1:
δₕ(t): target deflection angle required to correct heading error;
δₗₐₜ(t): target deflection angle required to correct lateral error.

The target deflection angle for heading error δₕ(t) is expressed as equation 3: ${δ}_{h} \left(t\right) = {θ}_{{traj}_{_ h}} - {θ}_{{ego}_{_ h}}$
θ_{traj_h}: tangential direction angle of the target trajectory, obtained through geometric calculations on the target trajectory;
θ_{ego_h}: body orientation angle of the controlled vehicle, obtained through the GNSS antenna.

The target deflection angle for lateral error δₗₐₜ(t) in equation 1 is calculated using equation 4, where the lateral error eₗₐₜ is obtained by calculating the distance from the vehicle's current position (obtained through GNSS) to the trajectory: ${δ}_{lat} \left(t\right) = {tan}^{- 1} \left(\frac{{e}_{lat}}{d \left(t\right)}\right)$
eₗₐₜ: lateral error between the controlled vehicle and the target trajectory, obtained through the geometric relationship between the vehicle position and the target trajectory;
d(t): distance that will be traveled along the trajectory's tangent at a certain speed over a specified period. It can be expressed as equation 5: $d \left(t\right) = n {V}_{c} T cos {δ}_{h} \left(t\right)$
n: number of cycles expected to achieve elat convergence, a constant;
T: time length of each control cycle;
V_{c}: current vehicle speed.

Combining the above, equation 1 can be expressed as: $δ = {ω}_{h} \left({θ}_{{traj}_{_ h}}-{θ}_{{ego}_{_ h}}\right) + {ω}_{lat} {tan}^{- 1} \left(\frac{{e}_{lat}}{n {V}_{c} T cos {δ}_{h} \left(t\right)}\right)$

The function in equation 6 characterizes the target deflection angle's ability to effectively track the target trajectory and its direction. In the autonomous driving process of tracked vehicles, the continuous fitting of the target deflection angle is the control process for the vehicle's lateral control.

### 2. Differential motion decoupling method based on kinematics

According to the differential model kinematics of tracked vehicles, $\left\{\begin{matrix}{V}_{c} = \frac{{V}_{R} + {V}_{L}}{2} \\ {ω}_{c} = \frac{{V}_{R} - {V}_{L}}{B}\end{matrix}\right.$
V_{L}, V_{R}: wrapping speeds of left and right tracks;
ω_{c}: yaw rate;
B: width of tracked vehicle chassis centerline, obtained in advance through measurement.

Introducing variable k, defined as the ratio of left to right wheel speeds: ${V}_{L} = k {V}_{R}$

Combining equation 8 with the differential model equation 7, the differential speed ratio of the tracked vehicle is: $k = \frac{2 {V}_{c} f \left(δ\right) - δ B}{2 {V}_{c} f \left(δ\right) + δ B}$

Where f(δ) can be considered as an adjustable parameter, a custom function of the deflection angle δ. Application example: $f \left(δ\right) = \sqrt{d {\left(t\right)}^{2} + {e}_{lat}^{2}}$

The target differential speed ratio of the tracked vehicle obtained through this method can effectively characterize the calculation method of the vehicle's motion target. Compared to traditional kinematic models, it reduces the complexity of target value calculation. Moreover, it is closer to the underlying principles of tracked vehicle motion control.

### 3. Calculation of target yaw rate for tracked vehicles

The target yaw rate is the steering action completed by the target deflection angle within the desired action time, therefore it is calculated by the following equation: ${ω}_{T} = \frac{{ΔV}_{L / R}}{B}$

In equation 11, ΔV_{L/R} represents the speed difference between the left and right tracks. The speed difference can also be calculated from the differential speed ratio: ${ΔV}_{L / R} = {V}_{L} - {V}_{R} = \frac{2 {V}_{c} \left(k-1\right)}{k + 1}$

Therefore, the calculation method for the target yaw rate is expressed as: ${ω}_{T} = \frac{2 {V}_{c} \left(k-1\right)}{B \left(k+1\right)}$

Thus, the target yaw rate can be calculated using the above equation, using the differential speed ratio obtained from the differential model, the vehicle width, and the current speed of the tracked vehicle. By controlling the control mechanism through the target yaw rate for autonomous driving, the motion response speed of the entire vehicle can be greatly improved. Compared to the target angular velocity obtained by differentiating the target deflection angle, the yaw rate obtained by this method is smoother and more precise. Compared to directly controlling with the deflection angle, the stability of the vehicle's motion process can also be significantly improved.

### 4. Execution of the control mechanism

By controlling the control mechanism for autonomous driving through the target yaw rate, the steering wheel's rotation action can be read by the steering wheel encoder, and the vehicle yaw rate achieved by the steering wheel action can be obtained through the vehicle's gyroscope. The control error of the control mechanism can be calculated by taking the difference between the target value and the actual value: ${e}_{ω} = {ω}_{T} - {ω}_{real}$ ωᵣₑₐₗ: the actual yaw rate of the real vehicle, which can be measured and obtained through the gyroscope.

The control of the control mechanism can use classical SISO control methods for tracking. Through the action of the steering wheel motor, the target ω_{T} is tracked to achieve convergence of e_{ω} to 0.

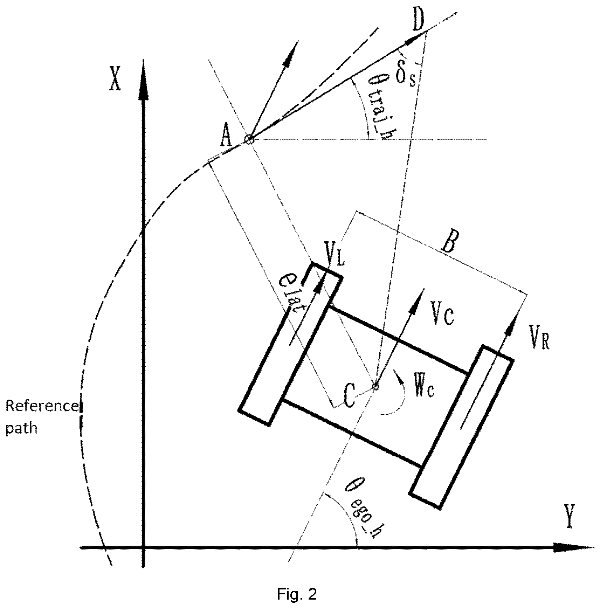

Referring to Figure 2, the following provides a detailed explanation of this invention through an implementation example.

This solution requires the installation of a GNSS antenna and a gyroscope on the tracked vehicle, with an encoder installed on the steering wheel. The distance between the vehicle body and the target trajectory, as well as the angle difference between the vehicle direction and the tangent of the target trajectory, are obtained through GNSS. The encoder is used to obtain the steering wheel angle.

Before starting operation, this solution needs to obtain the distance B between the centerlines of the two tracks.

This solution calculates the target yaw rate for trajectory tracking based on the lateral error and heading error of the tracked vehicle, using geometric and kinematic models of tracked vehicles and trajectory tracking. The control mechanism is then controlled to track and fit the target yaw rate.

The specific calculation process for the target yaw rate of the tracked vehicle is as follows:
Based on the vehicle position obtained from GNSS and the target trajectory position, the lateral error can be calculated by computing the distance from a point to a curve. The lateral error can be described geometrically as the angle that should be deflected to eliminate this lateral error: ${δ}_{lat} \left(t\right) = {tan}^{- 1} \left(\frac{{e}_{lat}}{d \left(t\right)}\right)$ where d(t) describes the distance that the longitudinal component of velocity will travel in the next n cycles. $d \left(t\right) = n {v}_{c} T cos {δ}_{h} \left(t\right)$

The target deflection angle required to correct the heading error can be calculated based on the difference between the vehicle body orientation and the tangential direction of the trajectory curve. ${δ}_{h} \left(t\right) = {θ}_{{traj}_{- h}} - {θ}_{{ego}_{_ h}}$

Combining the above two components: lateral and heading, the total angle to be deflected can be calculated as: $δ = {ω}_{h} \left({θ}_{{traj}_{h}}-{θ}_{{ego}_{h}}\right) + {ω}_{lat} {tan}^{- 1} \left(\frac{{e}_{lat}}{n {v}_{c} T cos {δ}_{h} \left(t\right)}\right)$

Due to the system's response characteristics, adjustment weights ω*ₕ* and ωₗₐₜ are added to both lateral and heading components simultaneously.

Based on the above equation, the target deflection angle for the tracked vehicle to achieve error convergence is calculated using the vehicle's position and pose, based on the geometric model.

The control mechanism of the tracked vehicle directly controls the speeds of the left and right tracks individually. In autonomous driving lateral control, the speed difference between the left and right tracks is the independent variable. In other words, the steering wheel rotation angle will affect the differential speed ratio of the left and right tracks. The differential speed ratio is another representation of the yaw rate. Since the yaw angle is the integral of the yaw rate, feedback control of the yaw rate can reduce the delay problem in executing actions.

The calculation method for the target yaw rate is derived from the kinematic model of the tracked vehicle. First, define the ratio of left to right wheel speeds: ${V}_{L} = k {V}_{R}$

Substituting the above equation into the kinematic equation of differential motion, we can obtain the differential speed ratio: $k = \frac{2 {V}_{c} f \left(δ\right) - δ B}{2 {V}_{c} f \left(δ\right) + δ B}$

The target yaw rate can be expressed in terms of the differential speed ratio: ${ω}_{T} = \frac{2 {V}_{c} \left(k-1\right)}{B \left(k+1\right)}$

Through this formula, the target yaw rate magnitude can be calculated. Based on this value, the actuator is controlled through the action of the control mechanism. Specifically for vehicles with steering wheel control, the vehicle's yaw rate is feedback-controlled through the steering wheel angle. The feedback error is: ${e}_{ω} = {ω}_{T} - {ω}_{real}$ where ωᵣₑₐₗ is the actual yaw rate of the current vehicle measured by the gyroscope. Control methods such as PID control can be used to make the angular velocity error converge to 0 by controlling the control mechanism.

It should be noted that in this document, relational terms such as "first" and "second" are only used to distinguish one entity or operation from another, and do not necessarily require or imply any actual relationship or order between these entities or operations. Moreover, the terms "include", "contain" or any other variants are intended to cover non-exclusive inclusion, so that a process, method, article, or device that includes a series of elements not only includes those elements, but also includes other elements not explicitly listed, or includes elements inherent to such process, method, article, or device.

Finally, it should be stated that: the above description is only the preferred embodiment of this invention and is not used to limit this invention. Although the invention has been described in detail with reference to the preceding embodiments, for those skilled in the art, they can still modify the technical solutions recorded in the preceding embodiments within the scope of the present invention as defined by the appended claims.

## Claims

1. A trajectory tracking method for tracked vehicles based on yaw rate, the tracking method including:
S100: calculating vehicle position and attitude based on GNSS information;
S200: determining a vehicle's lateral error and heading error;
S300: calculating a vehicle's target deflection angle required to correct the vehicle's lateral error and heading error;
S400: calculating a vehicle's target differential speed ratio of left to right wheel speeds;
S500: calculating a vehicle's target yaw rate;
S600: controlling the action of a control mechanism to complete yaw rate tracking;
wherein, in step S200, the lateral error is obtained through the geometric relationship between the vehicle position and a target trajectory;
**characterized in that**, in step S300, the calculation formula for the target deflection angle is: $δ = {ω}_{h} \left({θ}_{{traj}_{_ h}}-{θ}_{{ego}_{_ h}}\right) + {ω}_{lat} {tan}^{- 1} \left(\frac{{e}_{lat}}{n {V}_{c} T cos \left({θ}_{{traj}_{_ h}}-{θ}_{{ego}_{_ h}}\right)}\right)$
where, δ: target deflection angle; ω*ₕ*: weight of heading error; ωₗₐₜ: weight of lateral error; θ_{traj_h}: tangential direction angle of target trajectory; θ_{ego_h}: body orientation angle of controlled vehicle; eₗₐₜ: lateral error; n: number of cycles expected to achieve lateral error convergence;
T: time length of each control cycle; V_{c}: current vehicle speed; in step S400, the calculation
formula for the target differential speed ratio is: $k = \frac{2 {V}_{c} f \left(δ\right) - δB}{2 {V}_{c} f \left(δ\right) + δB}$
where, k: target differential speed ratio; f(δ): an adjustable parameter, being a custom function of target deflection angle δ; B: width of tracked vehicle chassis centerline; and
the custom function of target deflection angle δ is: $f \left(δ\right) = \sqrt{{\left(n {V}_{c} T cos\left({θ}_{{traj}_{_ h}}-{θ}_{{ego}_{_ h}}\right)\right)}^{2} + {e}_{lat}^{2}} .$

2. The trajectory tracking method for tracked vehicles based on yaw rate according to claim 1, **characterized in that** in S500, the calculation formula for the target yaw rate is: ${ω}_{T} = \frac{2 {V}_{c} \left(k-1\right)}{B \left(k+1\right)}$ where, ω_{T}: target yaw rate.

3. The trajectory tracking method for tracked vehicles based on yaw rate according to claim 2, **characterized in that** in S600, yaw rate tracking is completed by controlling the control mechanism to make a yaw rate error converge to 0, the calculation formula for the yaw rate error is: ${e}_{ω} = {ω}_{T} - {ω}_{real}$ where, e_{ω}: yaw rate error; ωᵣₑₐₗ: actual yaw rate of current vehicle measured by gyroscope.

4. The trajectory tracking method for tracked vehicles based on yaw rate according to claim 3, **characterized in that** based on the above algorithm, the vehicle's yaw rate is controlled through the control mechanism based on a real-time feedback of the yaw rate error.

5. The trajectory tracking method for tracked vehicles based on yaw rate according to claim 1, **characterized in that** the weights of heading error and lateral error are constants.

6. The trajectory tracking method for tracked vehicles based on yaw rate according to claim 1, **characterized in that** the weights of heading error and lateral error are functions, the functions are: $\left\{\begin{matrix}{ω}_{lat} = 5 + 0.5 {e}_{lat} \\ {ω}_{h} = 1\end{matrix}\right. .$

## Patentansprüche

1. Bewegungsbahn-Verfolgungsverfahren für Raupenfahrzeuge basierend auf der Gierrate, wobei das Verfolgungsverfahren Folgendes einschließt:
S100: Berechnen der Fahrzeugposition und -lage basierend auf GNSS-Informationen;
S200: Bestimmen der Querabweichung und des Ausrichtungsfehlers eines Fahrzeugs;
S300: Berechnen des Soll-Auslenkungswinkels eines Fahrzeugs, der erforderlich ist, um die Querabweichung und den Ausrichtungsfehler des Fahrzeugs zu korrigieren;
S400: Berechnen des Soll-Drehzahldifferenzverhältnisses zwischen den Drehzahlen der linken und rechten Räder eines Fahrzeugs;
S500: Berechnen der Soll-Gierrate eines Fahrzeugs;
S600: Steuern der Funktion eines Steuermechanismus zur vollständigen Gierratenverfolgung;
wobei in Schritt S200 die Querabweichung durch die geometrische Beziehung zwischen der Fahrzeugposition und einer Soll-Bewegungsbahn erhalten wird;
**dadurch gekennzeichnet, dass** in Schritt S300 die Berechnungsformel für den Soll-Auslenkungswinkel lautet: $δ = {ω}_{h} \left({θ}_{{traj}_{_ h}}-{θ}_{{ego}_{_ h}}\right) + {ω}_{lat} {tan}^{- 1} \left(\frac{{e}_{lat}}{n {V}_{c} T cos \left({θ}_{{traj}_{_ h}}-{θ}_{{ego}_{_ h}}\right)}\right)$
wobei, δ: Soll-Auslenkungswinkel; ω*ₕ*: Gewichtung des Ausrichtungsfehlers; ωₗₐₜ: Gewichtung der Querabweichung; θ_{traj_h}: tangentialer Richtungswinkel der Soll-Bewegungsbahn; θ_{ego_h}: Karosserieausrichtungswinkel des gesteuerten Fahrzeugs; eₗₐₜ: Querabweichung; n: Anzahl der Zyklen, die erwartet werden, um eine Querabweichungskonvergenz zu erreichen; T: Zeitdauer jedes Steuerzyklus; V_{c}: aktuelle Fahrzeuggeschwindigkeit; in Schritt S400 lautet die Berechnungsformel für das Soll-Drehzahldifferenzverhältnis: $k = \frac{2 {V}_{c} f \left(δ\right) - δB}{2 {V}_{c} f \left(δ\right) + δB}$
wobei k: Soll-Drehzahldifferenzverhältnis; f(δ): ein einstellbarer Parameter, wobei es sich um eine benutzerdefinierte Funktion des Soll-Auslenkungswinkels δ handelt; B: Breite der Mittellinie des Fahrwerks eines Raupenfahrzeugs; und
die benutzerdefinierte Funktion des Soll-Auslenkungswinkels δ lautet: $f \left(δ\right) = \sqrt{{\left(n {V}_{c} T cos\left({θ}_{{traj}_{_ h}}-{θ}_{{ego}_{_ h}}\right)\right)}^{2} + {e}_{lat}^{2}}$

2. Bewegungsbahn-Verfolgungsverfahren für Raupenfahrzeuge basierend auf der Gierrate nach Anspruch 1, **dadurch gekennzeichnet, dass** in S500 die Berechnungsformel für die Soll-Gierrate lautet: ${ω}_{T} = \frac{2 {V}_{c} \left(k-1\right)}{B \left(k+1\right)}$ wobei ω_{T}: Soll-Gierrate.

3. Bewegungsbahn-Verfolgungsverfahren für Raupenfahrzeuge basierend auf der Gierrate nach Anspruch 2, **dadurch gekennzeichnet, dass** in S600 die Gierratenverfolgung durch die Steuerung des Steuermechanismus abgeschlossen wird, um einen Gierratenfehler auf 0 zu konvergieren, wobei die Berechnungsformel für den Gierratenfehler lautet: ${e}_{ω} = {ω}_{T} - {ω}_{real}$ wobei e_{ω}: Gierratenfehler; ωᵣₑₐₗ: Ist-Gierrate des aktuellen Fahrzeugs, gemessen durch das Gyroskop.

4. Bewegungsbahn-Verfolgungsverfahren für Raupenfahrzeuge basierend auf der Gierrate nach Anspruch 3, **dadurch gekennzeichnet, dass** basierend auf dem oben genannten Algorithmus die Gierrate des Fahrzeugs durch den Steuermechanismus basierend auf einer Echtzeit-Rückmeldung des Gierratenfehlers gesteuert wird.

5. Bewegungsbahn-Verfolgungsverfahren für Raupenfahrzeuge basierend auf der Gierrate nach Anspruch 1, **dadurch gekennzeichnet, dass** die Gewichtungen des Ausrichtungsfehlers und der Querabweichung Konstanten sind.

6. Bewegungsbahn-Verfolgungsverfahren für Raupenfahrzeuge basierend auf der Gierrate nach Anspruch 1, **dadurch gekennzeichnet, dass** die Gewichtungen des Ausrichtungsfehlers und der Querabweichung Funktionen sind, wobei es sich bei den Funktionen um Folgendes handelt: $\left\{\begin{matrix}{ω}_{lat} = 5 + 0.5 {e}_{lat} \\ {ω}_{h} = 1\end{matrix}\right. .$

## Revendications

1. Procédé de suivi de trajectoire pour véhicules à chenilles sur la base d'un taux de lacet, le procédé de suivi comprenant :
S100 : le calcul d'une position et d'une attitude d'un véhicule à partir d'informations GNSS ;
S200 : la détermination d'une erreur latérale et d'une erreur de cap du véhicule ;
S300 : le calcul d'un angle de déviation cible du véhicule nécessaire pour corriger l'erreur latérale et l'erreur de cap du véhicule ;
S400 : le calcul d'un rapport de vitesse différentielle cible du véhicule entre des vitesses de roues gauche et droite ;
S500 : le calcul d'un taux de lacet cible du véhicule ;
S600 : la commande de l'action d'un mécanisme de commande pour réaliser le suivi de taux de lacet ;
dans lequel, à l'étape S200, l'erreur latérale est obtenue par la relation géométrique entre la position du véhicule et une trajectoire cible ;
**caractérisé en ce que**, à l'étape S300, la formule de calcul de l'angle de déviation cible est : $δ = {ω}_{h} \left({θ}_{{traj}_{_ h}}-{θ}_{{ego}_{_ h}}\right) + {ω}_{lat} {tan}^{- 1} \left(\frac{{e}_{lat}}{n {V}_{c} T cos \left({θ}_{{traj}_{_ h}}-{θ}_{{ego}_{_ h}}\right)}\right)$
où, δ : angle de déviation cible ; ω*ₕ* : poids de l'erreur de cap ; ωₗₐₜ : poids de l'erreur latérale ; θ_{traj_h}: angle de direction tangentielle de la trajectoire cible ; θ_{ego_h} : angle d'orientation de corps du véhicule commandé ; eₗₐₜ : erreur latérale ; n : nombre de cycles attendus pour atteindre la convergence d'erreur latérale ; T : durée de chaque cycle de commande ; V_{c} : vitesse actuelle du véhicule ; à l'étape S400, la formule de calcul du rapport de vitesse différentielle cible est : $k = \frac{2 {V}_{c} f \left(δ\right) - δB}{2 {V}_{c} f \left(δ\right) + δB}$
où, k : rapport de vitesse différentielle cible ; f(δ) : un paramètre ajustable, étant une fonction personnalisée de l'angle de déviation cible δ ; B : largeur de la ligne centrale du châssis du véhicule à chenilles ; et
la fonction personnalisée de l'angle de déviation cible δ est : $f \left(δ\right) = \sqrt{{\left(n {V}_{c} T cos\left({θ}_{{traj}_{_ h}}-{θ}_{{ego}_{_ h}}\right)\right)}^{2} + {e}_{lat}^{2}}$

2. Procédé de suivi de trajectoire pour véhicules à chenilles basé sur le taux de lacet selon la revendication 1, **caractérisé en ce que**, à l'étape S500, la formule de calcul du taux de lacet cible est : ${ω}_{T} = \frac{2 {V}_{c} \left(k-1\right)}{B \left(k+1\right)}$ où, ω_{T} : taux de lacet cible.

3. Procédé de suivi de trajectoire pour véhicules à chenilles sur la base du taux de lacet selon la revendication 2, **caractérisé en ce que**, à l'étape S600, le suivi de taux de lacet est réalisé en commandant le mécanisme de commande afin de faire converger l'erreur de taux de lacet vers 0, la formule de calcul de l'erreur de taux de lacet étant : ${e}_{ω} = {ω}_{T} - {ω}_{real}$ où, e_{ω} : erreur de taux de lacet ; ω_{réel} : taux de lacet réel du véhicule actuel mesuré par gyroscope.

4. Procédé de suivi de trajectoire pour véhicules à chenilles sur la base du taux de lacet selon la revendication 3, **caractérisé en ce que**, sur la base de l'algorithme ci-dessus, le taux de lacet du véhicule est commandé via le mécanisme de commande sur la base d'un retour en temps réel de l'erreur de taux de lacet.

5. Procédé de suivi de trajectoire pour véhicules à chenilles sur la base du taux de lacet selon la revendication 1, **caractérisé en ce que** les poids de l'erreur de cap et de l'erreur latérale sont des constantes.

6. Procédé de suivi de trajectoire pour véhicules à chenilles sur la base du taux de lacet selon la revendication 1, **caractérisé en ce que** les poids de l'erreur de cap et de l'erreur latérale sont des fonctions, les fonctions sont : $\left\{\begin{matrix}{ω}_{lat} = 5 + 0.5 {e}_{lat} \\ {ω}_{h} = 1\end{matrix}.\right.$
